# EUROPEAN PATENT APPLICATION

(11) **EP 2 053 586 A2**
(43) Date of publication of application: **29.04.2009**
(21) Application number: 08169212.1
(22) Date of filing: 03.03.2006
(51) Int. Cl.: G09G 3/28

(54) **Plasma display apparatus**

(30) Priority: 03.03.2005 KR 20050017934
(62) Divisional of application: 06251157.1
(71) Applicant: LG Electronics Inc., Seoul 150-721 (KR)
(72) Inventor: Park, Seong Hee, Seoul, 137-130 (KR); Choi, Jeong Pil, Gyeonggi-do (KR)
(74) Representative: Camp, Ronald

(57) **Abstract**

A plasma display apparatus comprises a data driver comprising a data arranging unit, which arranges a first number of input channels with a different number of output channels. The number of input channels may be greater or lesser than the number of output channels. Accordingly, the manufacturing cost of the plasma display apparatus decreases. Further, signal loss and noise in data transmission decrease.

## Description

This invention relates to a plasma display apparatus.

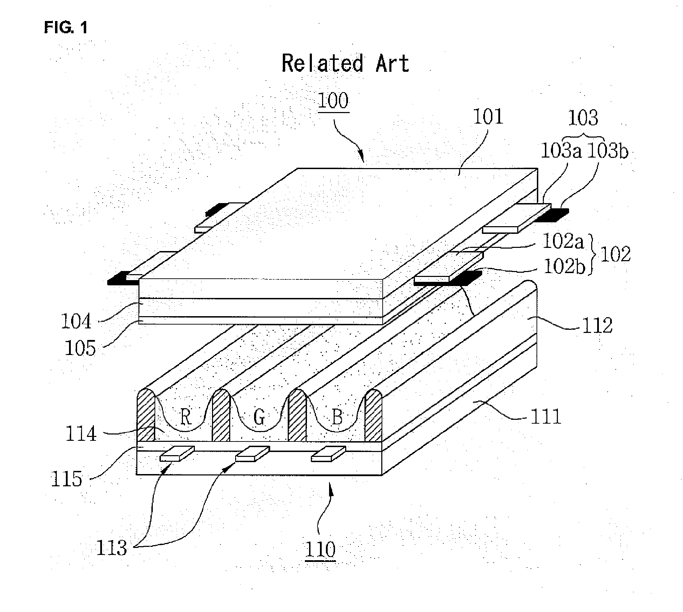

FIG. 1 shows the structure of a prior art plasma display panel. As shown in FIG. 1, the prior art plasma display panel comprises a front panel 100 and a rear panel 110. The front panel 100 comprises a front glass substrate 101 and the rear panel 110 comprises a rear glass substrate 111. The front panel 100 and the rear panel 110 are coupled with each other in parallel at a given distance therebetween.

A scan electrode 102 and a sustain electrode 103 are formed on the front glass substrate 101 to maintain light-emissions of discharge cells through a mutual discharge therebetween. The scan electrode 102 and the sustain electrode 103 each comprise transparent electrodes 102a and 103a made of a transparent material, for example, indium-tin-oxide (ITO) and bus electrodes 102b and 103b made of a metal material. A scan signal for scan of the plasma display panel and a sustain signal for discharge maintenance of the plasma display panel are supplied to the scan electrode 102. A sustain signal is mainly supplied to the sustain electrode 103. An upper dielectric layer 104 is formed on upper parts of the scan electrode 102 and the sustain electrode 103 to limit discharge current and to provide insulation between the scan electrode 102 and the sustain electrode 103. A protective layer 105 is formed of MgO for facilitating discharge conditions on an upper surface of the upper dielectric layer 104.

Address electrodes 113 are formed on the rear glass substrate 111 to intersect the scan electrode 102 and the sustain electrode 103. A lower dielectric layer 115 is formed on an upper part of the address electrode 113 to provide insulation between the address electrodes 113. Barrier ribs 112 are formed on the lower dielectric layer 115 to form discharge cells. A phosphor layer 114 is coated between the banier ribs 112 to emit visible light for displaying an image.

The front glass substrate 101 and the rear glass substrate 111 are coalesced using a sealing material. After performing an exhaust process, an inert gas such as helium (He), neon (Ne), xenon (Xe) is injected into the inside of the plasma display panel.

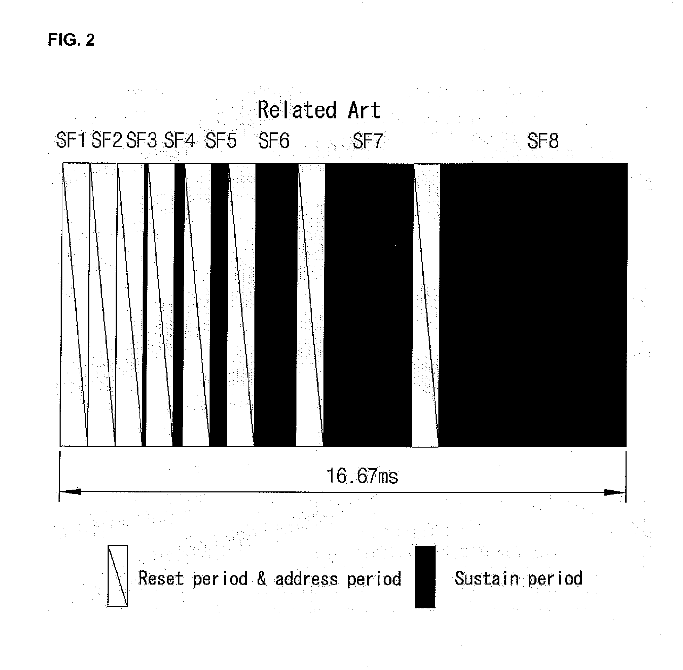

A method for representing gray scale in a prior art plasma display panel is shown in FIG. 2.

FIG. 2 illustrates a method for representing gray scale of an image of a prior art plasma display panel. As shown in FIG. 2, a frame period (16.67 ms) is divided into eight subfields SF1 to SF8. The eight subfields SF1 to SF8 each comprise a reset period, an address period and a sustain period.

The duration of the reset period in one subfield is equal to the durations of the reset periods in the remaining subfields. Likewise the reset period, the duration of the address period in one subfield is equal to the durations of the address periods in the remaining subfields. An address discharge is generated by the voltage difference between an address electrode and a scan electrode during the address period. The duration of the sustain period increases at a ratio of 2ⁿ (n = 0, 1, 2, 3, 4, 5, 6, 7) in each of the subfields. Since the duration of the sustain period of each of the subfields is different from one another, grey level of various images is represented by controlling the duration of the sustain period of each of the subfields.

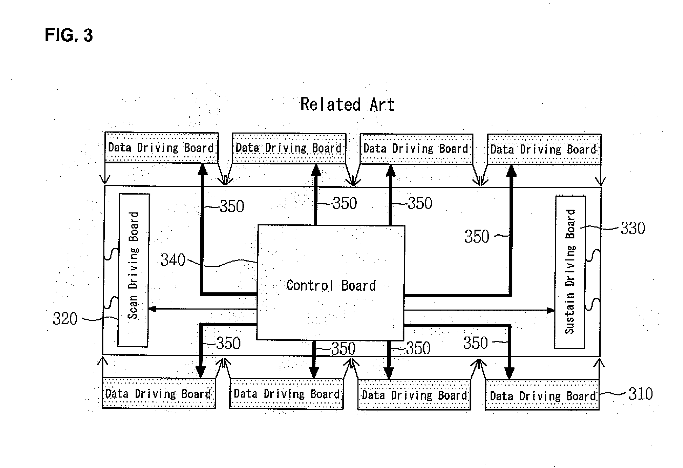

A plasma display apparatus for representing gray scale of the images as described above is shown in FIG. 3.

FIG. 3 illustrates a prior art plasma display apparatus. As shown in FIG. 3, the prior art plasma display apparatus comprises a data driving board 310, a scan driving board 320, a sustain driving board 330 and a control board 340.

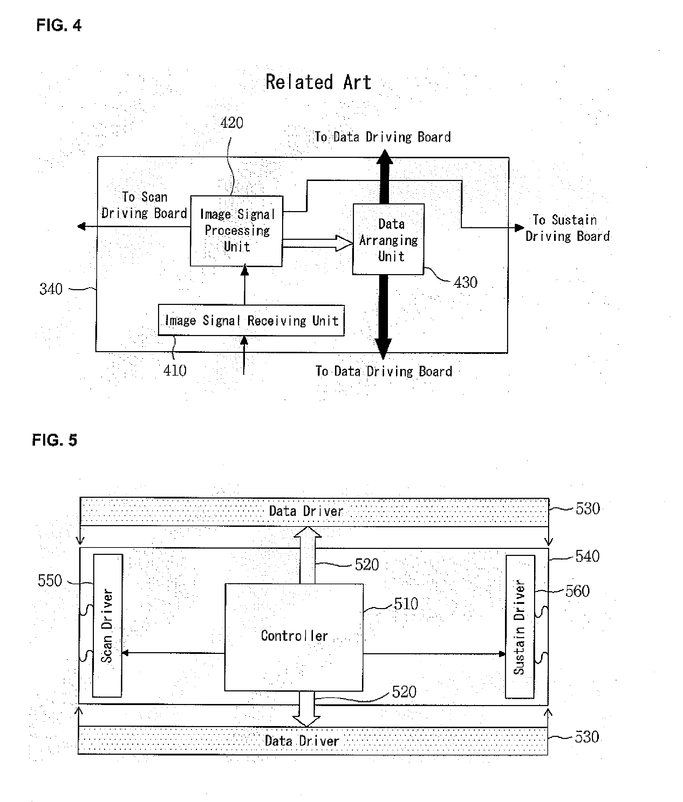

The data driving board 310 supplies an address pulse to an address electrode during an address period. The scan driving board 320 supplies to a scan electrode a reset pulse during a reset period, a scan pulse during the address period and a sustain pulse during a sustain period. The sustain driving board 330 supplies a sustain pulse to a sustain electrode during the sustain period. The control board 340 supplies data for controlling each of the pulses supplied from the driving boards 310, 320 and 330 to each of the corresponding driving boards 310, 320 and 330. The control board 340 will be described in detail with reference to FIG. 4.

FIG. 4 illustrates a control board of the prior art plasma display apparatus of FIG. 3. As shown in FIG. 4, the prior art control board 340 comprises an image signal receiving unit 410, an image signal processing unit 420 and a data arranging unit 430.

The image signal receiving unit 410 receives an image signal input from the outside, transforms the image signal into 8-bit initial image data, and outputs the 8-bit initial image data to the image signal processing unit 420.

The image signal processing unit 420 transforms the initial image data received from the image signal receiving unit 410 into image date suitable for the plasma display panel through an inverse gamma correction process, a gain control process, a half-toning process and a subfield mapping process.

The data arranging unit 430 arranges the image date received from the image signal processing unit 420 by each of subfields, and then transforms the arranged image date into addressing data. The data arranging unit 430 outputs the addressing data to the data driving board 310 through a cable 350 of FIG. 3.

Since a plasma display panel supports high definition, the number of channels of the cables 350 for transmitting the addressing data from the data arranging unit 430 of the control board 340 to the data driving board 310 increases. Accordingly, there is a problem in that the manufacturing cost of the plasma display apparatus increases.

Further, since the larger the size of the plasma display panel, the longer the length of the cable 350, signal attenuation of the addressing data transmitted through the cable 350 and crosstalk takes place. In particular, when the addressing data is transmitted using a transistor-transistor logic (TTL) method, signal loss and noise generation increase.

The present invention seeks to provide an improved plasma display apparatus.

Embodiments of the present invention can provide a plasma display apparatus for reducing the number of channels of a data transmitting unit.

Embodiments of the invention can provide a driving apparatus of a plasma display panel capable of reducing noise of data displayed on a screen by improving the driving apparatus of the plasma display panel.

In accordance with an aspect of the invention, a plasma display apparatus comprises a controller arranged to receive and process an image signal, comprising m channels for outputting image data, a data transmitting unit arranged to transmit the image data through the m channels, a data driver comprising a data arrangement unit comprising n channels and arranged to output addressing data transformed from the image data through the data transmitting unit and to output an addressing pulse depending on the addressing data, and a plasma display panel comprising an electrode for receiving the addressing pulse, wherein n is a natural number more than m.

The data arranging unit may output the addressing data arranged by each of subfields.

The data driver may be formed on one driving board.

The data driver may be formed on two or more driving boards. The data arrangement unit may be formed on one of the two or more driving boards. The plasma display apparatus may further comprise a cable connecting the data arrangement unit formed on the one driving board with the remaining driving boards.

The data driver may comprise p drive ICs for generating the addressing pulse. The data arrangement unit may comprise (p×q) or more pins to apply the addressing data of q-bit to the p drive ICs.

In accordance with another aspect of the invention a plasma display apparatus comprises a controller arranged to receive and process an image signal, comprising m channels for outputting image data, a data transmitting unit arranged to transmit the image data through the m channels, a data driver comprising a data arrangement unit comprising n channels for outputting addressing data transformed from the image data through the data transmitting unit and outputting an addressing pulse depending on the addressing data, and a plasma display panel comprising an electrode for receiving the addressing pulse, wherein n is a natural number more than m, and wherein the controller is arranged to transmit the image data to the data arrangement unit at an input period of one frame period through the data transmitting unit.

The frame period may comprise a reset period, an address period and a sustain period. The input period may be at least one of the reset period, the address period or the sustain period.

In accordance with another aspect of the invention a plasma display apparatus comprises a controller arranged to receive and process an image signal, comprising r channels for outputting image data, a data transmitting unit arranged to transmit the image data through the r channels, a data driver comprising a data arrangement unit comprising s channels for outputting addressing data transformed from the image data through the data transmitting unit and to output an addressing pulse depending on the addressing data, and a plasma display panel comprising an electrode for receiving the addressing pulse, wherein s is a natural number more than r, and wherein the image data which the controller transmits to the data arrangement unit through the data transmitting unit, is a differential signal.

The controller may be arranged to transmit the differential signal using a low voltage differential signaling method or a transition minimized differential signaling method.

In accordance with another aspect of the invention a plasma display apparatus comprises a controller arranged to receive and process an image signal, comprising r channels for outputting image data, a data transmitting unit arranged to transmit the image data through the r channels, a data driver comprising a data arrangement unit comprising s channels for outputting addressing data transformed from the image data through the data transmitting unit and outputting an addressing pulse depending on the addressing data, and a plasma display panel comprising an electrode for receiving the addressing pulse, wherein r is a natural number equal to or less than 20, and s is a natural number more than r, and wherein the image data which the controller transmits to the data arrangement unit through the data transmitting unit, is a differential signal.

According to another aspect of the invention, there is provided a plasma display apparatus comprising a controller arranged to receive and process an image signal, comprising m channels for outputting image data, a data transmit unit arranged to transmit the image data through the m channels, a data driver comprising a data arrangement unit comprising n channels and arranged to output addressing data transformed from the image data through the data transmitting unit and to output an addressing pulse depending on the addressing data, and a plasma display panel comprising an electrode for receiving the addressing pulse, wherein n is a natural number more than m, and wherein the controller is arranged to transmit the image data to the data arrangement unit at an input period of one frame period through the data transmitting unit.

According to yet still another aspect of the invention, there is provided a plasma display apparatus comprising a controller arranged to receive and processes an image signal, comprising r channels for outputting image data, a data transmitting unit arranged to transmit the image data through the r channels, a data driver comprising a data arrangement unit comprising s channels for outputting addressing data transformed from the image data through the data transmitting unit and outputting an addressing pulse depending on the addressing data, and a plasma display panel comprising an electrode for receiving the addressing pulse, wherein r is a natural number equal to or less than 20, and s is a natural number more than r, and wherein the image data which the controller transmits to the data arrangement unit through the data transmitting unit, is a differential signal.

A plasma display apparatus according to the embodiments of the present invention can have reduced manufacturing cost by reducing the number of channels of the data transmitting unit.

A plasma display apparatus according to the embodiments of the present invention can exhibit reduced signal loss and noise in associated with data transmission.

Exemplary embodiments of the invention will now be described in detail by way of no-limiting example only, with reference to the drawings in which like numerals refer to like elements.

FIG. 1 shows a structure of a prior art plasma display panel;

FIG. 2 illustrates a method for representing gray scale of an image of a prior art plasma display panel;

FIG. 3 illustrates a prior art plasma display apparatus;

FIG. 4 illustrates a control board of the prior art plasma display apparatus of FIG. 3;

FIG. 5 illustrates a plasma display apparatus according to a first embodiment of the present invention;

FIG. 6a shows a controller of the plasma display apparatus according to the first embodiment of the present invention;

FIG. 6b shows a data driver of the plasma display apparatus according to the first embodiment of the present invention;

FIG. 7 is a waveform diagram for explaining an operation of the plasma display apparatus according to the first embodiment of the present invention;

FIG. 8 illustrates a plasma display apparatus according to a second embodiment of the present invention;

FIG. 9 shows a data driver of the plasma display apparatus according to the second embodiment of the present invention;

FIG. 10 illustrates a plasma display apparatus according to a third embodiment of the present invention;

FIG. 11a shows a controller of the plasma display apparatus according to the third embodiment of the present invention; and

FIG. 11b shows a data driver of the plasma display apparatus according to the third embodiment of the present invention.

[First Embodiment]

As shown in FIG. 5, a plasma display apparatus comprises a controller 510, a data transmitting unit 520, a data driver 530, a plasma display panel 540, a scan driver 550 and a sustain driver 560. At least one of the controller 510, the data driver 530, the scan driver 550 or the sustain driver 560 may be formed on one driving board.

The controller 510 controls an operation of each of the data driver 530, the scan driver 550 and the sustain driver 560. The controller 510 receives and processes an image signal, and comprises m channels for outputting image data.

The data transmitting unit 520 transmits the image data received through the m channels. The data transmitting unit 520 comprises a cable. The data transmitting unit 520 further may comprise not only m channels but also a control channel for transmitting a control signal. The data transmitting unit 520 further may comprise a dummy channel. However the provision of the control channel and dummy channel are not essential to the invention in its broadest aspect.

The data driver 530 comprises a data arranging unit having n channels (n is a natural number more than m) for outputting addressing data transformed from the image data input from the data transmitting unit 520. The data driver 530 outputs an addressing pulse depending on the addressing data.

The plasma display panel 540 comprises an address electrode to which the data driver 530 supplies the addressing pulse during an address period.

The scan driver 550 supplies to a scan electrode of the plasma display panel 540 a reset pulse during a reset period, a scan pulse during the address period and a sustain pulse during a sustain period.

The sustain driving board 330 supplies a sustain pulse to a sustain electrode of the plasma display panel 540 during the sustain period.

Since the data driver 530 of the plasma display apparatus comprises the data arranging unit, the number of channels of the data transmitting unit 520 decreases. In other words, in the case where the controller comprises the data arranging unit as in the prior art, the data arranging unit receives the image data through the m channels and then outputs the addressing data through the n channels. Accordingly, the data transmitting unit must comprise n channels.

However, since the data driver 530 of the plasma display apparatus of this embodiment comprises the data arranging unit, the data arranging unit of the data driver 530 receives the image data through the m channels of the data transmitting unit 520 and then outputs the addressing data through the n channels.

In other words, while the data transmitting unit of the prior art plasma display apparatus comprises the n channels, the data transmitting unit 520 of the plasma display apparatus according to the first embodiment comprises the m channels.

The manufacturing cost of the plasma display apparatus according to the first embodiment can be decreased by reducing the number of channels of the data transmitting unit 520.

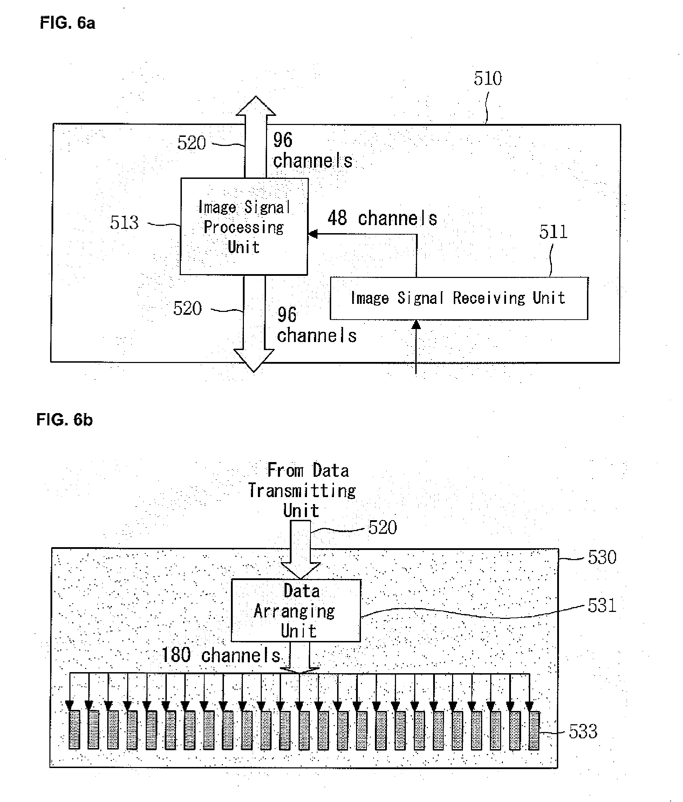

The controller 510 and the data driver 530 of the plasma display apparatus according to the first embodiment will be described in detail with reference to FIGS. 6a and 6b.

As shown in FIGS. 6a and 6b, the controller 510 comprises an image signal receiving unit 511 and an image signal processing unit 513. The data driver 520 comprises a data arranging unit 531 and a drive integrated circuit (IC) 533.

The image signal receiving unit 511 receives an image signal input from the outside, and then outputs the image signal to the image signal processing unit 513. The image signal receiving unit 511 receives the image signal, and then outputs 8-bit data of each of red (R), green (G) and blue (B). Further, when the data driver 530 is formed on each of upper and lower parts of the plasma display panel 540 as shown in FIG. 5, the image signal receiving unit 511 must support a dual channel. Therefore, the image signal receiving unit 511 outputs an initial image data through 48 (=8X3X2) channels.

The image signal processing unit 513 receives the initial image data from the image signal receiving unit 511, and then outputs image data by performing an inverse gamma correction process, a gain control process, a half-toning process and a subfield mapping process. Since the image signal processing unit 513 supports 16-bit data of each of R, G and B and a dual channel, the image signal processing unit 513 comprises 96 (=16X3X2) channels. The 16-bit data comprises information of mapped subfields. Accordingly, the controller 510 comprises 96 (= m) channels.

The data transmitting unit 520 transmits the image data received through 96 channels to the data driver 530. Accordingly, the data transmitting unit 520 supports 96 channels. In the present embodiment the data transmitting unit 520 further comprises a control channel for transmitting the control signal. The data transmitting unit 520 may further comprise the dummy channel. However, the provision of the control and dummy channels are not essential to the invention in its broadest aspect.

As shown in FIG. 6b, the data arranging unit 531 of the data driver 530 receives the image data from the data transmitting unit 520, rearranges the image date by each of subfields, and generates addressing data. The data arranging unit 531 supports the n (= pXq) channels for transmitting q-bit data to p drive ICs 533. Since the data arranging unit 531 transmits the addressing data corresponding to cells located on one line to the drive ICs 533 32 times, the data arranging unit 531 supports 132 (= n) channels for XGA screen resolution and 180 (= n) channels for full HD screen resolution.

The drive IC 533 receives the addressing data from the data arranging unit 531, generates an addressing pulse corresponding to the addressing data, and supplies the addressing pulse to the address electrode of the plasma display panel.

In the case where the controller comprises the data arranging unit as in the prior art, the data transmitting unit must support 180 channels. However, since the data driver 530 comprises the data arranging unit 531 in the plasma display apparatus according to the first embodiment, the data transmitting unit 520 supports 96 channels. Accordingly, the manufacturing cost of the plasma display apparatus can be reduced.

In this exemplary embodiment the data driver 530 are formed on one driving board in the plasma display apparatus. In other words, the data drivers 530 located on each of the upper and lower parts of the plasma display panel 540 are formed on one driving board. However this is not essential to the invention in its broadest aspect.

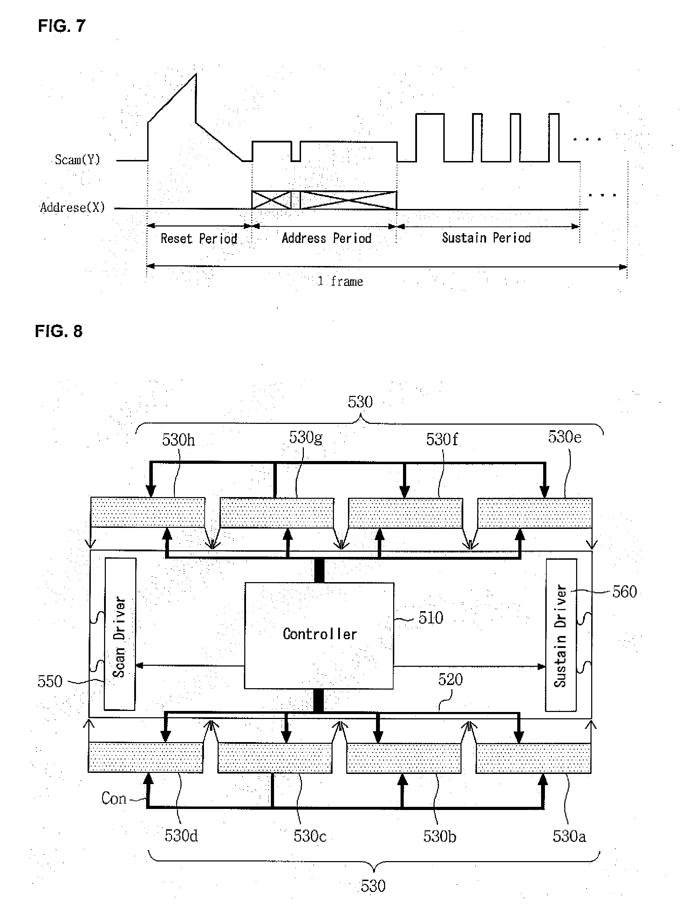

FIG. 7 is a waveform diagram for explaining an operation of the plasma display apparatus according to the first embodiment. When the data arranging unit 531 of FIG. 6b comprises memory capable of storing image data corresponding to one frame, the data arranging unit 531 of the data driver 530 may receive the image data from the controller 510 in any input period of one frame period. In the first embodiment, the input period comprises at least one of a reset period, an address period or a sustain period of a subfield included in one frame. However, since the controller comprises the data arranging unit in the prior art plasma display apparatus, the data driver receives the image data only in an address period of one subfield.

[Second Embodiment]

As shown in FIG. 8, the plasma display apparatus according to the second embodiment comprises a controller 510, a data transmitting unit 520, a data driver 530, a plasma display panel 540, a scan driver 550 and a sustain driver 560. In this embodiment at least one of the controller 510, the data driver 530, the scan driver 550 or the sustain driver 560 are formed on one driving board. However this is not essential to the invention in its broadest aspect.

Since the controller 510, the data transmitting unit 520, the plasma display panel 540, the scan driver 550 and the sustain driver 560 of the plasma display apparatus according to the second embodiment are the same as the first embodiment, descriptions thereof have been omitted.

Unlike the first embodiment, the data driver 530 of the plasma display apparatus according to the second embodiment is formed on a plurality of data driving boards 530a to 530h. Therefore, the data arranging unit and the interface structure of a drive IC are different from the first embodiment.

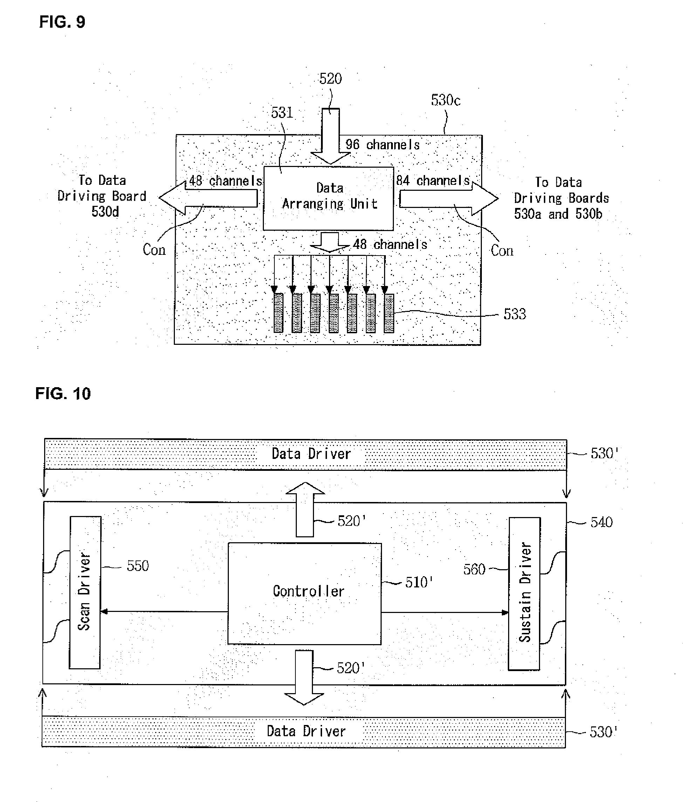

FIG. 9 shows a data driver of the plasma display apparatus according to the second embodiment of the present invention. As shown in FIG. 9, one data driving board 530c of the plurality of data driving boards 530a to 530h comprises a data arranging unit 531 and a drive IC 533.

As shown in FIG. 9, the data arranging unit 531 of the data driving boards 530c receives image data from the data transmitting unit 520, rearranges the image date by each of subfields, and generates addressing data. The data arranging unit 531 supports n (= pXq) channels for transmitting q-bit data to p drive ICs 533. Since the data arranging unit 531 transmits the addressing data corresponding to cells located on one line to the drive ICs 533 32 times, the data arranging unit 531 supports 132 (= n) channels for XGA screen resolution and 180 (= n) channels for full HD screen resolution.

The data arranging unit 531 according to the second embodiment of the present invention transmits the addressing data to the data drive IC 533 of the data driving board 530c through 48 channels. Further, the data arranging unit 531 transmits the addressing data to a data drive IC (not shown) of the data driving board 530d through 48 channels and transmits the addressing data to the data driving boards 530a and 530b through 84 channels. The data driving board 530c is connected to the remaining data driving boards 530a, 530b and 530d through a connecter Con.

The drive IC 533 receives the addressing data from the data arranging unit 531, generates an addressing pulse corresponding to the addressing data, and supplies the addressing pulse to an address electrode of the plasma display panel.

In the case where the controller comprises the data arranging unit as in the prior art, the data transmitting unit must support 180 channels. However, since the data driver 530 comprises the data arranging unit 531 in the plasma display apparatus according to the second embodiment, the data transmitting unit 520 supports 96 channels. Accordingly, the manufacturing cost of the plasma display apparatus can be reduced.

When the data arranging unit 531 of FIG. 9 in the plasma display panel according to the second embodiment comprises memory capable of storing image data corresponding to one frame in the same way as the first embodiment, the data arranging unit 531 of the data driver 530 may receive the image data from the controller 510 in any input period of one frame period. In the second embodiment, the input period comprises at least one of a reset period, an address period or a sustain period of a subfield included in one frame. However, since the controller comprises the data arranging unit in the prior art plasma display apparatus, the data driver receives the image data only in an address period of one subfield.

[Third Embodiment]

As shown in FIG. 10, a plasma display apparatus according to a third embodiment comprises a controller 510', a data transmitting unit 520', a data driver 530', a plasma display panel 540, a scan driver 550 and a sustain driver 560. At least one of the controller 510', the data driver 530', the scan driver 550 or the sustain driver 560 may be formed on one driving board. Since the plasma display panel 540, the scan driver 550 and the sustain driver 560 of the plasma display apparatus according to the third embodiment are the same as the second embodiment, descriptions thereof are omitted.

The controller 510' transmits image data in the form of differential signal in the third embodiment. Since the controller 510' outputs the image data through 16 (= r) channels, the data transmitting unit 520' supports 16 channels. The controller 510' transmits the differential signal using a low voltage differential signaling (LVDS) method or a transition minimized differential signaling (TMDS) method. When the controller 510' transmits the image data in the form of differential signal, the data transmitting unit 520' supports 20 or less channels. The data transmitting unit 520' may further comprise a control channel for transmitting a control signal. The data transmitting unit 520' may further comprise a dummy channel. The control and dummy channels are not essential to the invention in its broadest aspect.

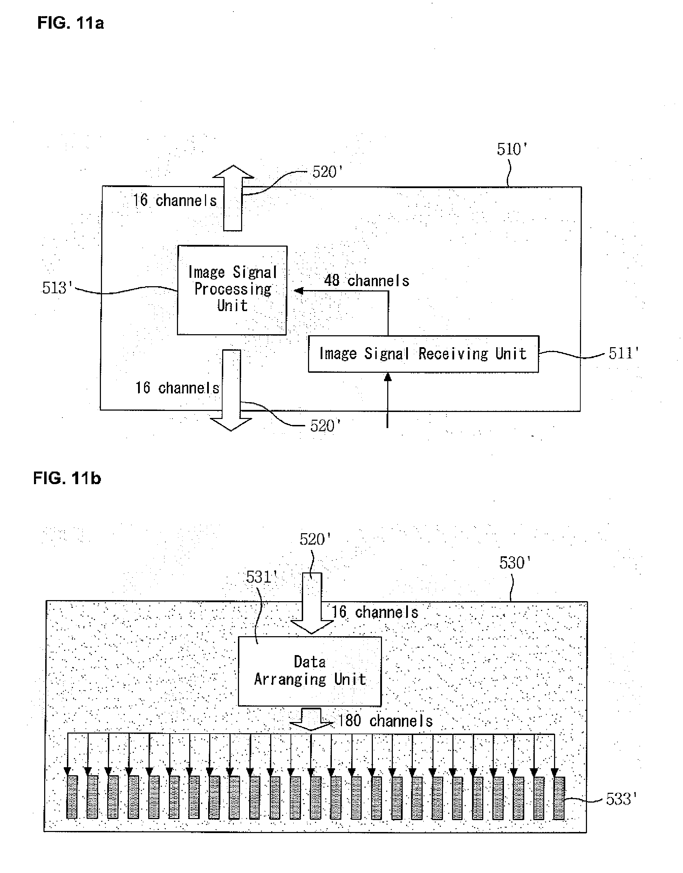

FIG. 11a shows a controller of the plasma display apparatus according to the third embodiment. FIG. 11b shows a data driver of the plasma display apparatus according to the third embodiment.

As shown in FIG. 11a, an image signal receiving unit 511' receives an image signal input from the outside, and then outputs the image signal to an image signal processing unit 513'. The image signal receiving unit 511' receives the image signal, and then outputs 8-bit data of each of R, G and B. Further, when the data driver 530' is formed on each of upper and lower parts of the plasma display panel 540 as shown in FIG. 10, the image signal receiving unit 511' must support a dual channel. Therefore, the image signal receiving unit 511' outputs an initial image data through 48 (=8X3X2) channels.

The image signal processing unit 513' receives the initial image data from the image signal receiving unit 511', and then outputs image data by performing an inverse gamma correction process, a gain control process, a half-toning process and a subfield mapping process. The image signal processing unit 513' transmits the image data in the form of differential signal. Since the image data is 74.25 MHz in the first and second embodiments, the image data of 74.25 MHz is transmitted through 96 channels. When the image data in the third embodiment is transformed into image data of 148.5 MHz and then the image data of 148.5 MHz is transmitted using the LVSD method or the TMDS method, the image data of 148.5 MHz may be transmitted through 16 (= r) channels. Accordingly, the number of channels supported by the data transmitting unit in the third embodiment decreases in comparison to the first and second embodiments. Further, the differential signal reduces noise. The differential signal is also advantageous in the long-distance transmission of the image data in comparison to a transistor-transistor logic (TTL) signal.

As shown in FIG. 11b, the data arranging unit 531' of the data driver 530' rearranges the image date input through the 16 channels by each of subfields, and then generates addressing data. The data arranging unit 531' supports s (= pXq) channels for transmitting q-bit data to p drive ICs 533. Since the data arranging unit 531' transmits the addressing data corresponding to cells located on one line to the drive ICs 533' 32 times, the data arranging unit 531' supports 132 (= s) channels for XGA screen resolution and 180 (= s) channels for full HD screen resolution.

When the data arranging unit 531' of FIG. 11b according to the third embodiment comprises memory capable of storing image data corresponding to one frame in the same way as the first and second embodiments, the data arranging unit 531' of the data driver 530' may receive the image data from the controller 510 in any input period of one frame period. In the third embodiment, the input period comprises at least one of a reset period, an address period or a sustain period of a subfield included in one frame. However, since the controller comprises the data arranging unit in the prior art plasma display apparatus, the data driver receives the image data only in an address period of one subfield.

Embodiments of the invention having been thus described, it will be obvious that the same may be varied in many ways. Such variations are not to be regarded as a departure from the scope of the invention, and all such modifications as would be obvious to one skilled in the art are intended to be included within the scope of the claims.
Aspects and features of the present disclosure are set out in the following numbered clauses which contain the subject matter of the claims of the parent application as filed.
1. A plasma display apparatus comprising:
   a controller arranged to receive and process an image signal, comprising m channels for outputting image data;
   a data transmitting unit arranged to transmit the image data through the m channels;
   a data driver comprising a data arrangement unit comprising n channels arranged to output addressing data transformed from the image data through the data transmitting unit and to output an addressing pulse depending on the addressing data; and
   a plasma display panel comprising an electrode for receiving the addressing pulse,
   wherein n is a natural numbed more than m.
2. The plasma display apparatus of clause 1, wherein the data arranging unit is arranged to output the addressing data arranged by each of subfields.
3. The plasma display apparatus of clause 1 or 2, wherein the data driver is formed on one driving board.
4. The plasma display apparatus of clause 1 or 2, wherein the data driver is formed on two or more driving boards, the data arrangement unit is formed on one of the two or more driving boards, and the plasma display apparatus further comprises a cable connecting the data arrangement unit formed on the one driving board with the remaining driving boards.
5. The plasma display apparatus of any one of clauses 1 to 4, wherein the data driver comprises p drive integrated circuits (ICs) arranged to generate the addressing pulse, and the data arrangement unit comprises (p×q) or more pins to apply the addressing data of q-bit to the p drive ICs.
6. A plasma display apparatus comprising:
   a controller arranged to receive and process an image signal, comprising m channels for outputting image data;
   a data transmitting unit arranged to transmit the image data through the m channels;
   a data driver comprising a data arrangement unit comprising n channels arranged to output addressing data transformed from the image data through the data transmitting unit and outputting an addressing pulse depending on the addressing data; and
   a plasma display panel comprising an electrode for receiving the addressing pulse,
   wherein n is a natural number more than m, and
   wherein the controller is arranged to transmit the image data to the data arrangement unit at an input period of one frame period through the data transmitting unit.
7. The plasma display apparatus of clause 6, wherein the data arranging unit is arranged to output the addressing data arranged by each of subfields.
8. The plasma display apparatus of clause 6 or 7, wherein the data driver is formed on one driving board.
9. The plasma display apparatus of clause 6 or 7, wherein the data driver is formed on two or more driving boards, the data arrangement unit is formed on one of the two or more driving boards, and the plasma display apparatus further comprises a cable connecting the data arrangement unit formed on the one driving board with the remaining driving boards.
10. The plasma display apparatus of any one of clauses 6 to 9, wherein the data driver comprises p drive ICs for generating the addressing pulse, and the data arrangement unit comprises (p×q) or more pins to apply the addressing data of q-bit to the p drive ICs.
11. The plasma display apparatus of any one of clauses 6 to 10, wherein the frame period comprises a reset period, an address period and a sustain period, and the input period is at least one of the reset period, the address period or the sustain period.
12. A plasma display apparatus comprising:
   a controller arranged to receive and process an image signal, comprising r channels for outputting image data;
   a data transmitting unit arranged to transmit the image data through the r channels;
   a data driver comprising a data arrangement unit comprising s channels arranged to output addressing data transformed from the image data through the data transmitting unit and to output an addressing pulse depending on the addressing data; and
   a plasma display panel comprising an electrode for receiving the addressing pulse,
   wherein s is a natural number more than r, and
   wherein the image data which the controller transmits to the data arrangement unit through the data transmitting unit, is a differential signal.
13. The plasma display apparatus of clause 12, wherein the data arranging unit is arranged to output the addressing data arranged by each of subfields.
14. The plasma display apparatus of clause 12 or 13, wherein the data driver is formed on one driving board.
15. The plasma display apparatus of clause 12 or 13, wherein the data driver is formed on two or more driving boards, the data arrangement unit is formed on one of the two or more driving boards, and the plasma display apparatus further comprises a cable connecting the data arrangement unit formed on the one driving board with the remaining driving boards.
16. The plasma display apparatus of any one of clauses 12 to 15, wherein the data driver comprises p drive ICs for generating the addressing pulse, and the data arrangement unit comprises (p×q) or more pins and arranged to apply the addressing data of q-bit to the p drive ICs.
17. The plasma display apparatus of any one of clauses 12 to 16, wherein the controller is arranged to transmit the image data to the data arrangement unit at an input period of one frame period through the data transmitting unit.
18. The plasma display apparatus of clause 17, wherein the frame period comprises a reset period, an address period and a sustain period, and the input period is at least one of the reset period, the address period or the sustain period.
19. The plasma display apparatus of any one of clauses 12 to 18, wherein the controller is arranged to transmit the differential signal in a low voltage differential signaling method or a transition minimized differential signaling method.
20. A plasma display apparatus comprising:
   a controller arranged to receive and process an image signal, comprising r channels for outputting image data;
   a data transmitting unit arranged to transmit the image data through the r channels;
   a data driver comprising a data arrangement unit comprising s channels arranged to output addressing data transformed from the image data through the data transmitting unit and to output an addressing pulse depending on the addressing data; and
   a plasma display panel comprising an electrode for receiving the addressing pulse,
   wherein r is a natural number equal to or less than 20, and s is a natural number more than r, and
   wherein the image data which the controller transmits to the data arrangement unit through the data transmitting unit, is a differential signal.
21. The plasma display apparatus of clause 20, wherein the data arranging unit is arranged to output the addressing data arranged by each of subfields.
22. The plasma display apparatus of clause 20 or 21, wherein the data driver comprises p drive ICs arranged to generate the addressing pulse, and the data arrangement unit comprises (p×q) or more pins arranged to apply the addressing data of q-bit to the p drive ICs.
23. The plasma display apparatus of any one of clauses 20 to 22, wherein the controller is arranged to transmit the image data to the data arrangement unit at an input period of one frame period through the data transmitting unit.
24. The plasma display apparatus of clause 23, wherein the frame period comprises a reset period, an address period and a sustain period, and the input period is at least one of the reset period, the address period or the sustain period.
25. The plasma display apparatus of any one of clauses 20 to 24, wherein the controller is arranged to transmit the differential signal in a low voltage differential signaling method or a transition minimized differential signaling method.

## Claims

1. A plasma display apparatus comprising:
a controller (510,510') arranged to receive and process an image signal, comprising m channels for outputting image data;
a data transmitting unit (520,520') arranged to transmit the image data through the m channels;
a data driver (530,530') comprising a data arrangement unit (531,531') which comprises n channels arranged to output addressing data transformed from the image data through the data transmitting unit and drive integrated circuits, ICs, (533,533') arranged to generate addressing pulses depending on the addressing data; and
a plasma display panel (100) comprising address electrodes (113) for receiving the addressing pulses,
wherein n is a natural number more than m, and the data arranging unit is arranged to output the addressing data arranged by each of subfields,
wherein the data arrangement unit (531,531') is formed on a driving board on which the drive integrated circuits, ICs, (533,533') are formed instead of a controlling board on which the controller (510,510') is formed.

2. The plasma display apparatus of claim 1, wherein the data driver (530) is formed on one driving board.

3. The plasma display apparatus of claim 1, wherein the data driver (530') is formed on two or more driving boards, the data arrangement unit (531') is formed on one of the two or more driving boards, and the plasma display apparatus further comprises a cable connecting the data arrangement unit formed on the one driving board with the remaining driving boards.

4. The plasma display apparatus of any one of claims 1 to 3, wherein the data driver comprises p drive integrated circuits ICs (533,533') arranged to generate the addressing pulse, and the data arrangement unit comprises pxq or more pins to apply the addressing data of q-bit to the p drive ICs.

5. The plasma display apparatus of claim 1 or 2,
wherein the controller is arranged to transmit the image data to the data arrangement unit at an input period of one frame period through the data transmitting unit.

6. The plasma display apparatus of claim 5 when appendent to claim 1, wherein the data driver is formed on two or more driving boards, the data arrangement unit (531,531') is formed on one of the two or more driving boards, and the plasma display apparatus further comprises a cable connecting the data arrangement unit formed on the one driving board with the remaining driving boards.

7. The plasma display apparatus of any one of claims 5 or 6, wherein the data driver comprises p drive ICs for generating the addressing pulse, and the data arrangement unit comprises pxq or more pins to apply the addressing data of q-bit to the p drive ICs.

8. The plasma display apparatus of any one of claims 5 to 7, wherein the frame period comprises a reset period, an address period and a sustain period, and the input period is at least one of the reset period, the address period or the sustain period.

9. The plasma display apparatus of claim 1 or 2,
wherein the image data which the controller transmits to the data arrangement unit through the data transmitting unit, is a differential signal.

10. The plasma display apparatus of claim 9 when appendent to claim 1, wherein the data driver (530') is formed on two or more driving boards, the data arrangement unit (531') is formed on one of the two or more driving boards, and the plasma display apparatus further comprises a cable connecting the data arrangement unit formed on the one driving board with the remaining driving boards.

11. The plasma display apparatus of any one of claims 9 or 10, wherein the data driver (530') comprises p drive ICs for generating the addressing pulse, and the data arrangement unit comprises pxq or more pins and arranged to apply the addressing data of q-bit to the p drive ICs.

12. The plasma display apparatus of any one of claims 9 to 11, wherein the controller is arranged to transmit the image data to the data arrangement unit at an input period of one frame period through the data transmitting unit.

13. The plasma display apparatus of claim 12, wherein the frame period comprises a reset period, an address period and a sustain period, and the input period is at least one of the reset period, the address period or the sustain period.

14. The plasma display apparatus of any one of claims 9 to 13, wherein the controller is arranged to transmit the differential signal in a low voltage differential signaling method or a transition minimized differential signaling method.

15. The plasma display apparatus of claim 1,
wherein m is a natural number equal to or less than 20, and n is a natural number more than m, and
wherein the image data which the controller transmits to the data arrangement unit through the data transmitting unit, is a differential signal.

16. The plasma display apparatus of claim 15, wherein the data driver comprises p drive ICs (533) arranged to generate the addressing pulse, and the data arrangement unit comprises pxq or more pins arranged to apply the addressing data of q-bit to the p drive ICs.

17. The plasma display apparatus of claims 15 or 16, wherein the controller is arranged to transmit the image data to the data arrangement unit at an input period of one frame period through the data transmitting unit.

18. The plasma display apparatus of claim 17, wherein the frame period comprises a reset period, an address period and a sustain period, and the input period is at least one of the reset period, the address period or the sustain period.

19. The plasma display apparatus of any one of claims 15 to 18, wherein the controller is arranged to transmit the differential signal in a low voltage differential signaling method or a transition minimized differential signaling method.
